Europäisches Patentamt

(19) European Patent Office

Office européen des brevets

(11) Publication number:  **0 039 995**
**A1**

(12) **EUROPEAN PATENT APPLICATION**

(21) Application number: **81301484.2**

(22) Date of filing: **07.04.81**

(51) Int. Cl.³: **F 16 K 47/08**

(30) Priority: **09.04.80 GB 8011747**

(43) Date of publication of application:
**18.11.81 Bulletin 81·46**

(84) Designated Contracting States:
**BE DE FR GB IT NL**

(71) Applicant: **KENT PROCESS CONTROL LIMITED**
**ARMYTAGE ROAD INDUSTRIAL ESTATE ARMYTAGE**
**ROAD**
**BRIGHOUSE WEST YORKSHIRE HD6 1QF(GB)**

(72) Inventor: **Merrifield, Robert James**
**4 Trenance Gardens Greetland**
**Halifax West Yorkshire(GB)**

(74) Representative: **Atkinson, Peter Birch**
**WHEATLEY & MACKENZIE SCOTTISH LIFE HOUSE**
**BRIDGE STREET**
**MANCHESTER M3 3DP(GB)**

(54) **Fluid pressure reducing valve.**

㊄ A fluid pressure reducing valve 1 comprieses a pressure reducing assembly 2 separating a high pressure chamber 3 from a low pressure chamber 4. The assembly 2 includes a cylindrical apertured sleeve 6 surrounded by a plurality of concentric staggered rows of spaced rods 9. Flow channels 19 - 22 extend transversely to the rods 9 and each communicate at their radially inner ends with selected apertures 7 of the sleeve 6. A valve plug 5 is slidable within sleeve 6 to cover or uncover apertures 7 to control fluid flow through the valve. Pressure reduction occurs firstly by passage of fluid through apertures 7 and secondly by passage through the flow channels 19, 20, 21 or 22. In the flow channels, fluid is expanded vertically as well as horizontally. Additionally fluid follows a diversionary course around the rods to cause a pressure reduction.

COMPLETE DOCUMENT

./...

FIG.1

2.

**0039995**

The present invention relates to fluid pressure reducing valves.

Pressure reducing valves have the function of reducing the pressure of a fluid, i.e. a gas, vapour or liquid, to a desired level.

If a high pressure reduction is required, such as may be encountered in natural gas processing, it is essential that the valve does not generate excessive noise and is not subject to violent vibration such as would cause premature failure of the valve.

The Applicants prior U.K. Patent No. 1,405,850 describes a construction of fluid pressure reducing valve which includes a valve trim comprising a plurality of concentric apertured sleeves located in spaced apart relationship by annular flanges which define between the chambers a plurality of annular spaces.

Fluid pressure reduction is achieved by virtue of fluid passing along a tortuous pathway from the inside to the outside of the trim (or _vice verse_) _via_ the annular spaces which act as expansion chambers. Such a valve comprising three concentric sleeves is suitable for producing high pressure reductions in which the ratio of the initial pressure to the final pressure is 3:1 or above depending on the valve size. To increase the pressure reduction for a valve of a particular size, it is necessary to increase the number of sleeves. This does however increase the cost of the valve, and may in fact increase the size of the valve beyond that which is acceptable for the particular application.

It is an object of the invention to obviate or mitigate the abovementioned disadvantages. **BAD ORIGINAL**

According to the present invention there is provided a fluid pressure reducing valve comprising a high pressure chamber separated from a low pressure chamber by a pressure reducing assembly including an apertured sleeve and a plurality of spaced elongate elements arranged externally around the sleeve transversely to the direction of fluid flow, said elements defining a pressure reducing fluid flow pathway, and a control member slidable within the sleeve to control fluid flow through said assembly.

Pressure reduction by the valve is provided by the apertured sleeve and by the arrangement of the spaced elongate elements. Fluid flowing into the element arrangement will act against the elements and also be split into streams passing in opposite directions around an element before the streams impinge against each other. All of these processes contribute to the pressure reduction provided by the elements. Preferably the elements are arranged in at least partially staggered relationship along the direction of fluid flow to increase the extent to which the fluid flow is diverted during passage through the arrangement. Most preferably the elongate elements are arranged in staggered rows.

The invention will be further described by way of example only with reference to the accompanying drawings, in which:-

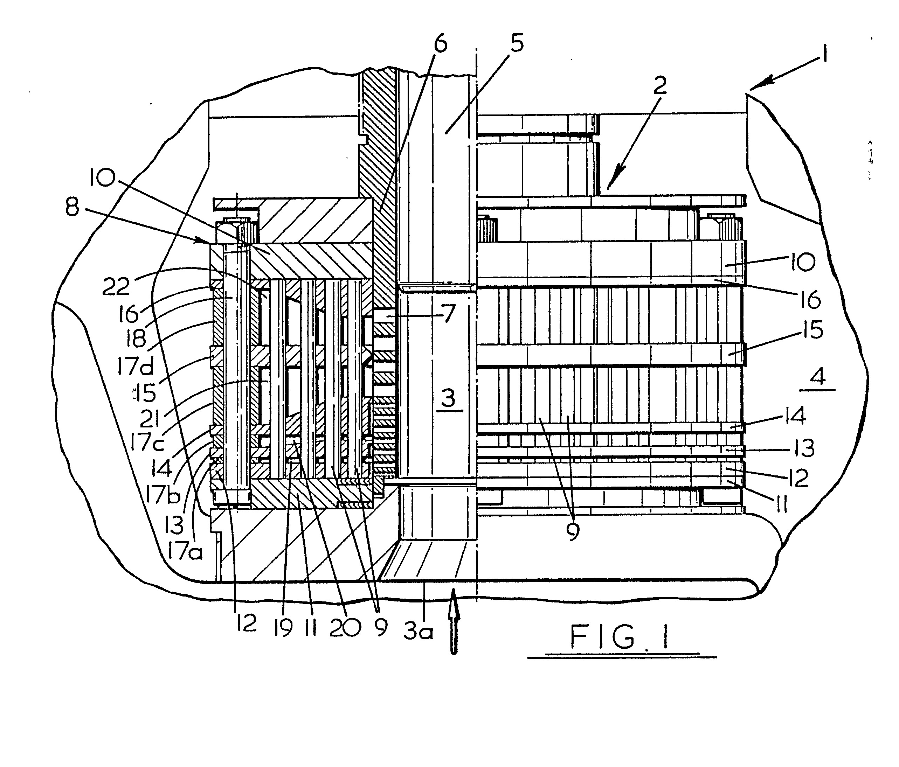

Fig. 1 is a part sectional view of one embodiment of fluid pressure reducing valve in accordance with the invention; and

Fig. 2 is a plan view showing an arrangement of pins to be used in the valve shown in Fig. 1.

Referring to the drawing, a fluid pressure reducing valve 1, e.g. for reducing the pressure of natural gas comprises an annular fluid pressure reducing assembly 2 which defines an inner high pressure chamber 3, provided with an inlet 3a, and an outer low pressure chamber 4. The valve 1 also has a control plug 5 slidable within the high pressure chamber 3 towards and away from the inlet 3a.

The pressure reducing assembly 2 comprises an inner tubular sleeve 6 penetrated by radial orifices 7, and an outer annular pressure reducing arrangement 8 which includes a plurality of spaced circular-section pins 9 arranged parallel to the axis of sleeve 6. The sleeve 6 is a close fit within the arrangement 8. The orifices 7 extend helically around sleeve 6 such that apertures 7 are continuously uncovered as plug 5 is raised. There is an increase in the size of apertures 7 from the bottom to the top of sleeve 6. Apertures 7 may however be of the same diameter over a full turn of the helix, the size change occurring at the commencement of the next turn. It is also possible for apertures of any one size to extend around two or more turns of the helix. Additionally, the orifices 7 are arranged such that the valve 1 has an equal percentage characteristic.

The pressure reducing arrangement 8 comprises upper and lower annular plates 10 and 11 respectively together with intermediate plates 12 to 16. Plate 12 lies against the lower annular plate 11 and plate 16 lies against upper annular plate 10, the remaining plates 13-15 being held in spaced apart relationship between the plates 12 and 16 by the presence of spacers 17 a-d located around bolts 18 which hold the arrangement 8 together.  Additionally included in the arrangement 8 are the pins 9 which extend through suitably positioned apertures in the plates 12 to 16 and locate at their ends within apertures in plates 10 and 11.

Axially spaced and radially extending fluid flow passageways 19 - 22 are defined between adjacent pairs of plates 12 to 16, the dimensions of these passageways being partly determined by the heights of the spacers 17.  The lowermost spacer 17a, which serves to define passageway 19, is of lesser height than the spacer 17b which defines passageway 20.  Spacers 17c and 17d are of the same height, which is greater than that of spacer 17b.

Each fluid flow passageway 19, 20, 21 or 22 has a central outwardly diverging section.  These divergent sections are provided, in the case of flow passageways 19, 20 and 21, by radially outwardly and downwardly sloping sections of the upper surfaces of plates 12, 13, and 14 respectively and, in the case of flow passageway 22, by a radially outwardly and upwardly sloping section of the lower surface of plate 16.  Flow passageway 19 has a lesser degree of divergence than passageway 20 which in turn is of less divergence than passageway 21. The upper fluid flow passageway 22 is of the same

6.

0039995

dimensions as passageway 23.

The inner peripheral edges of the plates 12 and 13 are recessed so as to allow communication of the lower three turns of orifices 7 in the sleeve 6 with, and only with, fluid flow passageway 19. The next four upper turns of orifices 7 are only in communication with fluid flow passageway 20. Similarly fluid flow passageways 21 and 22 communicate with selected upper turns of orifices in the sleeve 6.

The height of the passageways 19 - 22 at their radially inner ends in relation to the height of the annular recess with which the respective passageways communicates is such that the valve has an equal percentage characteristic. Equal percentage characteristic is a term well understood in this technology and is essentially a relationship defining the percentage area of apertures uncovered for a given lift of the plug. For the illustrated valve, the height of any one annular recess (which effectively corresponds to a certain percentage lift of the plug) will be a certain percentage of the sum total of the heights of all the annular recesses, and the height of the radially inner end of the passageway 19, 20, 21 or 22 which communicates with that annular recess will be calculated by determining, from the equal percentage relationship, the percentage area of apertures which should be uncovered for that value of the percentage height of the annular recess.

It should also be noted that the height of the passageways 19-22 at their radially outer edges bear the same relationship to each other as at their radially inner edges so as to maintain the equal percentage relationship for the valve.

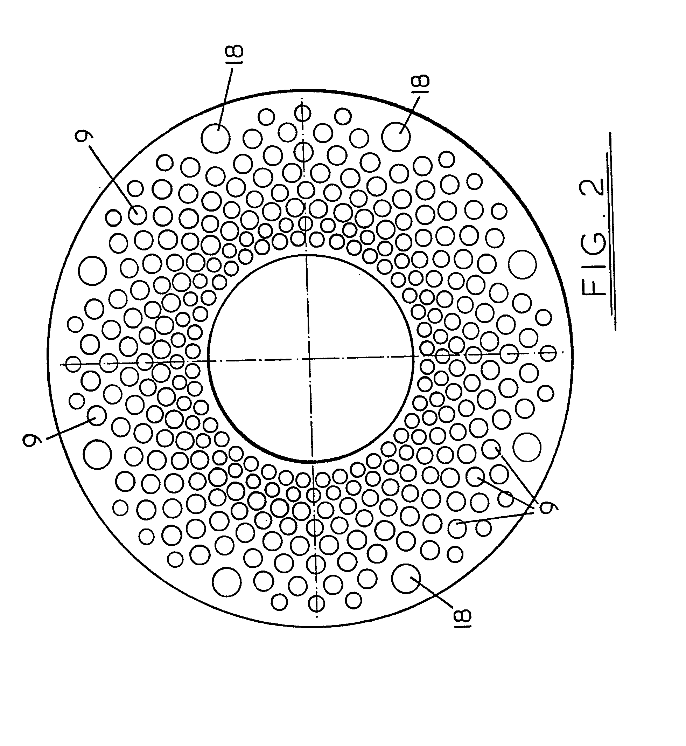

An arrangement for the pins 9 is shown in plan view in Fig. 2. As shown in this drawing, the pins 9 are arranged in circular rows with the pins 9 of one row being staggered with regard to the pins 9 of the adjacent circular row. The pins 9 of the innermost rows, say the four inner rows, may be of the same diameter whereas the pins 9 of the remaining outer rows may be of slightly larger diameter. Furthermore the spacing between the pins 9 in any one circular row is less than the spacing in the nextmost outer row, for the reasons described below.

The pins 9 may be of any suitable material, e.g. steel, and their surfaces will preferably be machined so that there is less chance of turbulence as fluid moves through the pins 9.

The operation of the valve 1 is as follows.

The inlet 3a of the valve 1 will be connected to a source of fluid under high pressure (not shown) and the control plug 5 raised to the position most suitable for the desired pressure reduction. With the plug 5 raised, fluid from the high pressure chamber 3 passes through the exposed orifices 7 in the sleeve 6, into the available fluid flow passageways 19, 20, 21 or 22, and thence to low pressure chamber 4.

Pressure reduction occurs in a number of stages. Fluid passing through the orifices 7 expands into the associated fluid flow passageway 19, 20, 21 or 22 and is thereby reduced in pressure. On encountering the first circular row of pins 9, at least part of the fluid must divert its course so as to pass around the pins 9. This divergence causes a further pressure reduction, as also does the impingement of fluid streams which converge together after having taken opposite flow paths around a pin 9. The process of divergence and convergence is repeated as the fluid passes radially outwardly through the arrangement of pins 9 until the fluid, at the desired reduced pressure, enters the low pressure chamber 4. The provision of divergent sections between the plates 12 - 16 also aids in the pressure reduction of the fluid.

The provision of divergent sections in the passageways/19-22 is for design convenience. The illustrated valve is intended for a pressure reduction ratio of 25:1, the fluid at the outlet being about 10 times larger by volume (based on adiabatic expansion) than that at the inlet. A trim which would achieve this change in volume without divergent fluid flow passageways 19-22 would require the spacing of the pins 9 to be too close for practical manufacture of the valve. In the illustrated valve, the fluid is therefore allowed to expand vertically as well as horizontally, and this allows a practical spacing of pins 9 to be obtained.

As mentioned above, the spacing between pins 9 in any one row is slightly less than the spacing in the next outer row. This increased spacing in the outer row takes account of the pressure and density reduction which occurs during passage of the fluid past the adjacent inner row of pins 9 and ensures that the fluid maintains a constant velocity.

The abovedescribed valve has the advantage that it is suitable for effecting high pressure reductions with low noise and vibrations. It should however be appreciated that the number of rows of pins 9 will determine the maximum pressure reduction which the valve is capable of achieving with satisfactory noise and vibration levels. For higher pressure reductions it is necessary to provide a greater number of rows of pins than for lower pressure reductions.

The addition of extra rows of pins 9 will not however add significantly to the size of the valve, and consequently valves in accordance with the invention may be designed for high pressure reductions for which conventional fluid pressure reducing valves would be too large.

The abovedescribed valve also has the advantage of ease of manufacture, and may be produced relatively cheaply as compared with prior art valves for performing a similar function.

A number of modifications may be made to the illustrated construction of valve without departing from the scope of the invention.

For example, the valve may be designed for a pressure reduction ratio which permits of the use of fluid flow passageways 19 - 22 which are of constant cross-sectional width along their length, i.e. the plates 12 - 16 are flat. Alternatively the plates 12 - 16 may be omitted entirely such that the fluid may expand into the entire volume between the rods 9.

The pins 9 need not be of circular cross-section. The pins 9 could for example be of square, triangular or other cross-sectional shape.

CLAIMS

1.    A fluid pressure reducing valve comprising a high pressure chamber separated from a low pressure chamber by a pressure reducing assembly including an apertured sleeve and a plurality of spaced elongate elements arranged externally around the sleeve transversely to the direction of fluid flow, said elements defining a pressure reducing fluid flow pathway, and a control member slidable within the sleeve to control fluid flow through said assembly.

2.    A valve as claimed in claim 1 wherein the elongate elements are arranged in at least partially staggered relationship along the direction of fluid flow.

3.    A valve as claimed in claim 2 wherein the elongate elements are arranged in staggered rows.

4.    A valve as claimed in claim 1 wherein the sleeve is cylindrical and the elongate elements are parallel to the longitudinal axis of the cylinder.

5.    A valve as claimed in claim 4 wherein the elongate elements are arranged in a plurality of concentric staggered rows around the sleeve.

6.    A valve as claimed in claim 5 wherein divider elements are provided to define a plurality of radially extending axially spaced flow channels through the elongate elements, each said flow channel communicating at its radially inner end with selected apertures of the sleeve.

7.   A valve as claimed in claim 6 wherein the flow channels diverge radially outwardly.

8.   A valve as claimed in any one of claims 5 to 7 wherein the elongate elements in an inner row are spaced from each other by a distance less than the spacing between elements in the nextmost outer row.

9.   A valve as claimed in any one of claims 4 to 8 wherein the elongate elements are of circular section.

10.  A valve as claimed in any one of claims 4 to 9 wherein the apertures are arranged as a helical row around the sleeve.

FIG. I

0039995

FIG. 2

0039995

## DOCUMENTS CONSIDERED TO BE RELEVANT

| Category | Citation of document with indication, where appropriate, of relevant passages | Relevant to claim |
|---|---|---|
| | <u>DE - A1 - 2 514 879</u> (HOLTER REGELARMATUREN GMBH)<br><br>. + Totality +<br><br>-- | 1,4,6, 7,10 |
| | <u>DE - A1 - 2 728 697</u> (BENDER)<br><br>+ Totality +<br><br>---- | 1,4,6, 1o |

**CLASSIFICATION OF THE APPLICATION (Int Cl ⁻)**

F 16 K 47/08

**TECHNICAL FIELDS SEARCHED (Int. Cl.3)**

F 16 K   1/00
F 16 K   3/00
F 16 K 17/00
F 16 K 47/00
G 05 D   7/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 23-06-1981 | ROUSSARIAN |

EPO Form 1503.1   06.78